# FASCICULE DE BREVET EUROPEEN

(11) **EP 3 381 748 B1**
(45) Date de publication et mention de la délivrance du brevet: **03.09.2025**
(21) Numéro de dépôt: 18164171.3
(22) Date de dépôt: 27.03.2018
(51) Int. Cl.: B60Q 3/62, B60Q 3/64, B60Q 3/66, B60Q 3/74, B60Q 3/76, F21S 43/19, F21S 43/14, F21S 43/31

(54) **MODULE D'ÉCLAIRAGE INTÉRIEUR POUR VÉHICULE AUTOMOBILE**
INNENBELEUCHTUNGSMODUL FÜR KRAFTFAHRZEUG
INTERIOR LIGHTING MODULE FOR A MOTOR VEHICLE

(30) Priorité: 31.03.2017 FR 1752770
(43) Date de publication de la demande: 03.10.2018
(73) Titulaire: Valeo Vision, 93012 Bobigny Cedex (FR)
(72) Inventeur: TASSY, Pierre-Louis, 93012 Bobigny Cedex (FR); TREBES, Martin, 96476 Bad Rodach (DE); XUE, Jingjing, 93012 Bobigny Cedex (FR); HAEBLER, Peter, 96476 Bad Rodach (DE)
(74) Mandataire: Valeo Visibility

(56) Documents cités:
- EP-A1- 1 864 859
- EP-A1- 3 318 446
- WO-A1-2008/044460
- DE-A1- 102007 053 186
- DE-A1- 102015 114 861
- DE-A1- 102015 213 210
- DE-T2- 60 223 050
- DE-T2- 60 223 050
- DE-U1- 202013 101 038
- DE-U1- 202013 101 038
- DE-U1- 29 811 417
- DE-U1- 29 811 417

## Description

### Domaine technique

La présente invention se situe dans le domaine de l'industrie automobile, et concerne plus particulièrement des modules d'éclairages intérieurs pour véhicule automobile afin d'éclairer tout ou partie d'un habitacle de véhicule automobile.

### État de la technique antérieure

De manière connue, un habitacle de véhicule automobile est équipé de modules d'éclairage intérieur afin de permettre aux usagers dudit véhicule automobile d'éclairer tout ou partie de l'habitacle, en fonction de leurs besoins. Ces modules d'éclairage participent ainsi au bien-être des usagers et permettent d'améliorer leur confort. Les documents DE 10 2015 114 861 A1 et WO 2008/044460 A1 divulguent un module d'éclairage intérieur pour véhicule automobile.

Il existe plusieurs types de modules d'éclairage permettant de générer des faisceaux lumineux variés afin de réaliser plusieurs fonctions lumineuses. Par exemple, lorsqu'un véhicule est à l'arrêt, il peut être intéressant d'éclairer de manière homogène l'habitacle intérieur afin de permettre aux usagers de voir facilement l'intérieur du véhicule automobile. En revanche, dans une situation de conduite par exemple, il peut être recherché de ne pas éclairer un poste de conduite du véhicule automobile tandis que les autres passagers pourraient souhaiter un éclairage partiel en fonction de leurs besoins. Ainsi, un éclairage très ponctuel, dont la dispersion spatiale du faisceau lumineux est très faible, peut être recherché afin d'apporter un point lumineux sur une surface réduite : c'est le cas par exemple des liseuses qui permettent de générer un faisceau lumineux très étroit qui permet à un usager de lire sans éclairer le reste de l'habitacle et sans gêner le conducteur.

Pour satisfaire à ces multiples besoins d'éclairage, il est connu d'intégrer dans le plafonnier de l'habitacle du véhicule automobile de nombreuses sources lumineuses et/ou plusieurs modules d'éclairage remplissant chacun une fonction lumineuse bien définie. Par exemple, un plafonnier est souvent équipé d'au moins une liseuse pour le passager situé à côté du conducteur, ainsi que d'au moins un point d'éclairage pour éclairer de manière plus globale l'habitacle.

Un inconvénient connu est lié à l'encombrement du plafonnier : la multiplicité des sources lumineuses et/ou des modules d'éclairage, associé aux faibles espaces disponibles dans ledit plafonnier pour leur intégration, ne permettent pas toujours de satisfaire correctement aux nombreux besoins d'éclairage de l'habitacle, ou au prix d'une conception onéreuse.

La présente invention a pour objet de répondre au moins en grande partie aux problèmes précédents et de conduire en outre à d'autres avantages en proposant nouveau module d'éclairage intérieur pour véhicule automobile.

Un autre but de la présente invention est de faciliter l'intégration d'un tel module d'éclairage dans un plafonnier d'habitacle de véhicule automobile.

Un autre but de la présente invention est de réduire les coûts de fabrication d'un tel module d'éclairage.

Un autre but de la présente invention est de réduire les coûts d'intégration d'un tel module d'éclairage dans le plafonnier d'habitacle de véhicule automobile.

### Exposé de l'invention

Selon un premier aspect de l'invention, on atteint au moins l'un des objectifs précités avec un module d'éclairage intérieur pour véhicule automobile, ledit module comprend les caractéristiques de la revendication 1.

Le module d'éclairage selon l'invention comprend ainsi au moins deux sources lumineuses, chaque source lumineuse étant associée à un guide optique permettant de générer une fonction lumineuse particulière. Ainsi, le module d'éclairage conforme au premier aspect de l'invention permet de générer au moins deux fonctions lumineuses différentes. **Il** en résulte une intégration plus facile dans l'habitacle du véhicule automobile, et plus particulièrement encore dans le plafonnier. En effet, les sources lumineuses étant toutes situées sur un même substrat plan, la mise en collaboration du substrat du module d'éclairage conforme au premier aspect de l'invention avec le substrat principal de l'habitacle est facilitée : il est beaucoup plus simple d'établir les connexions électriques entre le module d'éclairage et l'habitacle.

Par substrat, on entend un support destiné à recevoir les sources lumineuses et notamment à établir une liaison électrique entre les sources lumineuses et un circuit électrique de l'habitacle du véhicule automobile. D'une manière générale, le substrat comprend un matériau destiné à recevoir l'impression d'un circuit électronique, et /ou différents composants constituant un tel circuit électronique. À titre d'exemple non limitatif, le substrat peut avantageusement former une carte électronique, telle que par exemple un circuit imprimé, ou PCB (acronyme anglais connu pour *« Printed Circuit Board* »). Complémentairement, le substrat du module d'éclairage conforme au premier aspect de l'invention sert aussi de référence mécanique sur laquelle les différents éléments dudit module d'éclairage sont référencés - directement ou indirectement - afin de leur permettre de collaborer ensemble et de générer les faisceaux lumineux correspondants.

D'une manière générale, le support du module d'éclairage conforme au premier aspect de l'invention est destiné à collaborer avec le circuit électrique de l'habitacle du véhicule automobile, et plus particulièrement avec le circuit électrique d'un plafonnier dudit habitacle. Le substrat du module d'éclairage est distinct du circuit électrique de l'habitacle, afin de faciliter l'intégration électrique et mécanique dudit module d'éclairage dans l'habitacle.

Conformément au premier aspect de l'invention, le substrat est plan. Le substrat comprend au moins une surface plane formant un plan d'élongation dudit substrat. Dans la suite de la description, la propriété « plane » du substrat désigne l'au moins une surface plane dudit substrat. Selon l'invention la surface plane du substrat est formée par une première face située en regard des guides optiques du module d'éclairage. Alternativement, la surface plane du substrat peut être formée par une deuxième face située à l'opposé des guides optiques du module d'éclairage par rapport audit substrat. D'une manière générale, mais non limitative, la première face et la deuxième face du substrat sont au moins en partie parallèles entre elles, le substrat pouvant former par exemple une carte électronique, telle que décrit précédemment.

Chaque source lumineuse associée à un guide optique permet de générer une fonction lumineuse particulière. Selon les besoins, chaque source lumineuse associée à son guide optique permet de générer une fonction lumineuse différente de toutes les autres, ou identique à au moins une partie des fonctions lumineuses générées par les autres sources lumineuses associées à leurs guides optiques. La fonction lumineuse traduit la destination du faisceau lumineux correspondant. À titre d'exemples non limitatifs, les fonctions lumineuses peuvent être : d'éclairer le plafonnier de l'habitacle de manière diffuse, d'éclairer l'habitacle de manière homogène, d'éclairer ponctuellement un cendrier, d'éclairer au moins une partie d'un tableau de bord du véhicule automobile, d'éclairer au moins une partie d'une console centrale de l'habitacle, d'éclairer au moins un des sièges de l'habitacle...

La fonction lumineuse est ainsi attachée à des caractéristiques particulières de faisceau lumineux. En fonction des fonctions lumineuses recherchées, les caractéristiques suivantes du faisceau lumineux peuvent être adaptées de manière isolée ou en combinaison : angle d'ouverture, orientation, intensité lumineuse, couleur. Un objet de l'invention conforme à son premier aspect est ainsi de définir un module lumineux comprenant au moins deux sources lumineuses associées chacune à un guide optique afin de générer au moins deux faisceaux lumineux ayant des caractéristiques différentes afin de produire au moins deux fonctions lumineuses différentes.

Chaque guide optique est défini par un axe optique qui s'étend selon une direction différente de l'axe optique des autres guides optiques. L'axe optique est défini ici comme un axe de symétrie ou un axe médian du guide optique. Par extension, l'axe optique du guide coïncide avantageusement avec l'axe optique du faisceau lumineux généré. Par « axe médian », on définit par exemple un axe barycentrique des rayons lumineux ayant traversé l'un des guides optiques du module d'éclairage et formant ainsi l'un des faisceaux lumineux. En d'autres termes, l'axe médian correspond à la direction de propagation majoritaire du faisceau lumineux considéré.

Le module d'éclairage conforme au premier aspect de l'invention peut comprendre avantageusement au moins un des perfectionnements ci-dessous, les caractéristiques techniques formant ces perfectionnements pouvant être prises seules ou en combinaison :
- au moins une partie des guides optiques est avantageusement réalisée dans une matière plastique et/ou en verre. On utilisera préférentiellement du polycarbonate (PC), du carbonate de polypropylène (PPC) ou du polyméthacrylate de méthyle (PMMA). De manière avantageuse, les guides optiques sont obtenus par moulage ;
- chaque guide optique est distinct des autres guides optiques. En d'autres termes, chaque guide optique est délimité par des parois qui sont distinctes des autres parois délimitant les autres guides optiques ;
- chaque source lumineuse est couplée optiquement à une extrémité d'un des guides optiques. Cette configuration avantageuse permet d'injecter au moins une partie des rayons lumineux générés par la source lumineuse dans le guide optique correspondant ;
- chaque guide optique comprend un tronçon de guidage et un tronçon de projection. Le tronçon de guidage permet d'acheminer les rayons lumineux générés par la source lumineuse correspondante vers le tronçon de projection dans lequel ils seront mis en forme afin de former le faisceau lumineux correspondant. À l'intérieur du tronçon de guidage, les rayons lumineux sont acheminés par réflexions internes ;
- le tronçon de guidage est situé entre le tronçon de projection et la source lumineuse correspondante ;
- Selon une première variante de réalisation, le tronçon de guidage est rectiligne. Ainsi, le tronçon de guidage s'étend en saillie à partir du substrat du module d'éclairage. Le tronçon de guidage peut s'étendre perpendiculairement par rapport au substrat et/ou de manière inclinée. Selon un mode de réalisation particulier, le tronçon de guidage de chaque guide optique s'étend de manière parallèle. Éventuellement, les tronçons de guidage de guides optiques s'étendent dans des directions différentes. De manière avantageuse, le tronçon de guidage d'au moins une partie des guides optiques s'étend à l'aplomb du substrat. Selon une deuxième variante de réalisation, le tronçon de guidage comprend au moins une partie coudée afin de tenir compte des contraintes d'intégration du module d'éclairage dans l'habitacle du véhicule automobile dans lequel il est destiné à être intégré. Les parties coudées des guides optiques peuvent bien évidemment être orientées dans des directions semblables ou différentes, afin de définir une orientation semblable ou respectivement différente des axes optiques de chaque tronçon de projection, permettant ainsi d'orienter les faisceaux lumineux générés dans des directions et selon des orientations différentes ;
- le tronçon de projection est parabolique ou hyperbolique, un angle d'ouverture du tronçon de projection permettant de définir un angle d'ouverture du faisceau lumineux correspondant ;
- de manière avantageuse, le tronçon de guidage et le tronçon de projection sont venus de matière. Alternativement, le tronçon de guidage et le tronçon de projection peuvent être rapportés et couplés optiquement l'un à l'autre ;
- les au moins deux guides optiques comprennent un premier guide optique pour générer un premier faisceau lumineux selon un premier angle d'ouverture et selon un premier axe optique, et un deuxième guide optique pour générer un deuxième faisceau lumineux selon un deuxième angle d'ouverture et selon un deuxième axe optique ;
- le premier angle d'ouverture est inférieur au deuxième angle d'ouverture. Cette configuration avantageuse permet ainsi de générer un premier faisceau lumineux dont une étendue spatiale est plus étroite que l'étendue spatiale du deuxième faisceau lumineux, chaque faisceau lumineux réalisant ainsi une fonction lumineuse différente ;
- le premier faisceau lumineux recouvre au moins en partie le deuxième faisceau lumineux. Cette configuration avantageuse permet de faire se croiser au moins une partie des rayons lumineux générés par la première source lumineuse avec au moins une partie des rayons lumineux générés par la deuxième source lumineuse. Pour ce faire, l'orientation de l'axe optique de chaque guide optique et/ou l'angle d'ouverture de chaque guide optique est configuré de manière à être orienté sensiblement en direction de l'autre guide optique ;
- selon une première alternative, le module d'éclairage conforme au premier aspect de l'invention comprend au moins une fenêtre optique située à une extrémité distale des guides optiques par rapport au substrat. Cette configuration avantageuse permet de protéger les extrémités distales de chaque guide optique à l'aide d'au moins une fenêtre optique correspondante. Selon une première variante, l'extrémité distale de chaque guide optique est fermée par une fenêtre optique distincte ; selon une deuxième variante, une fenêtre optique couvre les extrémités distales de plusieurs guides optiques. L'au moins une fenêtre optique est avantageusement réalisée dans un matériau transparent, tel que par exemple une matière plastique et/ou en verre. On utilisera préférentiellement du polycarbonate (PC), du carbonate de polypropylène (PPC) ou du polyméthacrylate de méthyle (PMMA). Avantageusement, l'au moins une fenêtre optique est venue de matière avec les guides optiques. Alternativement, l'au moins une fenêtre optique est rapportée et fixée solidairement à au moins une partie des guides optiques ;
- selon une deuxième alternative, le module d'éclairage conforme au premier aspect de l'invention comprend une seule fenêtre optique située à une extrémité distale des guides optiques par rapport au substrat, ladite fenêtre optique couvrant le premier et le deuxième guide optique. Cette configuration avantageuse permet de protéger les extrémités distales de chaque guide optique à l'aide de la fenêtre optique. La fenêtre optique est avantageusement réalisée dans un matériau transparent, tel que par exemple une matière plastique et/ou en verre. On utilisera préférentiellement du polycarbonate (PC), du carbonate de polypropylène (PPC) ou du polyméthacrylate de méthyle (PMMA). Avantageusement, la fenêtre optique est venue de matière avec les guides optiques. Alternativement, la fenêtre optique est rapportée et fixée solidairement aux guides optiques ;
- d'une manière générale, le module d'éclairage comprend une fenêtre optique située à une extrémité distale des au moins deux guides optiques par rapport au substrat, ladite fenêtre optique couvrant au moins les deux guides optiques ;
- la fenêtre optique est parallèle au substrat ; alternativement la fenêtre optique s'étend suivant un plan sécant avec un plan d'élongation du substrat. le plan comme décrit précédemment, le plan d'élongation du substrat correspond à la surface plane du substrat, ladite surface plane pouvant être formée par la face du substrat en regard des guides optiques ou la face opposée aux guides optiques par rapport au substrat. La fenêtre optique peut être plane ou courbe afin de s'adapter à la géométrie de l'habitacle du véhicule automobile avec lequel le module d'éclairage est destiné à collaborer ;
- les sources lumineuses sont avantageusement pilotables sélectivement ou collectivement. De manière avantageuse, chaque source lumineuse est du type d'une diode électroluminescente. À titre d'exemple non limitatif, les sources lumineuses peuvent être :
   o du type d'une diode à émission axiale, permettant de générer des rayons lumineux dans une direction principale sensiblement perpendiculaire au plan du support les supportant ; et/ou
   o du type d'une diode à émission latérale, permettant de générer des rayons lumineux dans une direction parallèle au plan du support les supportant ; et/ou
   o du type d'une diode à émission traversante, permettant de générer des rayons lumineux au travers du support les supportant.

Selon un deuxième aspect de l'invention, il est proposé un habitacle de véhicule automobile, ledit habitacle comprenant au moins un module d'éclairage intérieur conforme au premier aspect de l'invention ou selon l'un quelconque de ses perfectionnements, ledit module d'éclairage étant intégré à un plafonnier dudit habitacle.

La configuration compacte du module d'éclairage permet ainsi de faciliter son intégration dans le plafonnier de l'habitacle. En particulier, la caractéristique selon laquelle toutes les sources lumineuses sont situées sur un même support plan permet de faciliter l'établissement des connexions électriques avec le circuit électrique du plafonnier.

L'habitacle conforme au deuxième aspect de l'invention peut comprendre avantageusement au moins un des perfectionnements ci-dessous, les caractéristiques techniques formant ces perfectionnements pouvant être prises seules ou en combinaison :
- le premier axe optique du premier guide optique du module est orienté au niveau d'un siège dudit habitacle, et le deuxième axe optique du deuxième guide optique est orienté en direction d'une console centrale dudit habitacle ;
- le premier guide optique est agencé pour générer un premier faisceau lumineux avec un angle d'ouverture inférieur à un angle d'ouverture d'un deuxième faisceau lumineux généré par le deuxième guide optique ;
- le module d'éclairage est disposé sur une partie centrale du plafonnier de l'habitacle. Alternativement, le module d'éclairage est disposé d'un côté du plafonnier de l'habitacle. Selon un mode de réalisation avantageux, l'habitacle comprend un premier et un deuxième module d'éclairage intérieur, le premier module d'éclairage étant situé d'un premier côté de l'habitacle du véhicule automobile et le deuxième module d'éclairage étant situé d'un deuxième côté de l'habitacle, préférentiellement de manière symétrique par rapport à un axe médian dudit habitacle. L'axe médian est préférentiellement un axe qui s'étend depuis l'arrière du véhicule automobile vers l'avant ;
- le substrat de chaque module est couplé électriquement et/ou mécaniquement à un circuit électrique du plafonnier et solidaire dudit circuit électrique, par exemple par brasure et/ou par un couplage mécanique indépendant du type de vis de fixation ou par engagement de formes complémentaires avec le circuit électrique par exemple.

Des modes de réalisation variés de l'invention sont prévus, intégrant selon l'ensemble de leurs combinaisons possibles les différentes caractéristiques optionnelles exposées ici.

### Description des figures

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 illustre un premier exemple de réalisation d'un module d'éclairage conforme au premier aspect de l'invention ;
- la FIGURE 2 illustre un deuxième exemple de réalisation d'un module d'éclairage conforme au premier aspect de l'invention ;
- la FIGURE 3 illustre une vue partielle d'un plafonnier d'habitacle intérieur intégrant deux modules d'éclairage conformes au premier aspect de l'invention ;
- la FIGURE 4 illustre une vue partielle d'un habitacle de véhicule automobile conforme au deuxième aspect de l'invention.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

### Description détaillée de l'invention

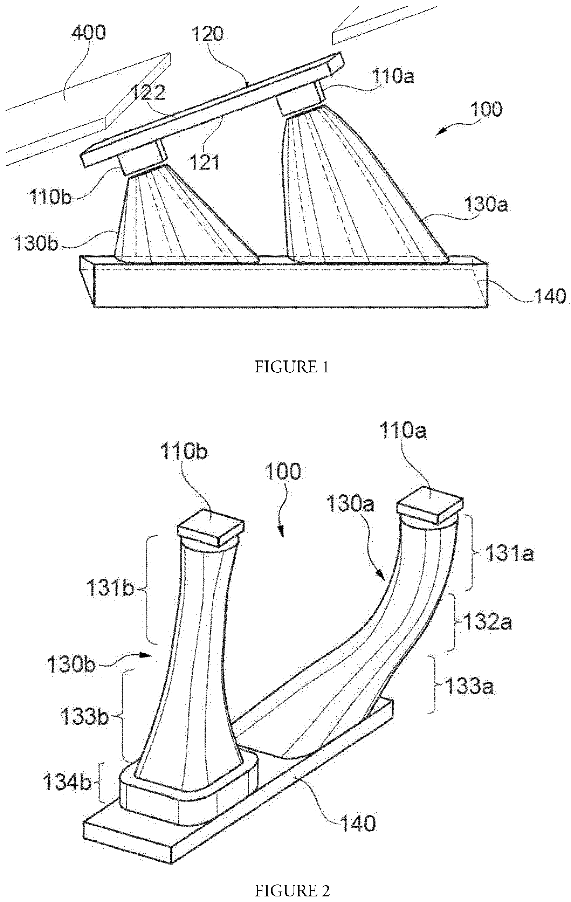

En référence aux FIGURES 1 et 2, un module 100 d'éclairage intérieur pour véhicule automobile comprend :
- deux sources lumineuses 110a, 110b agencées pour émettre des rayons lumineux lorsqu'elles sont polarisées sélectivement ou collectivement par un module de commande non représenté. Comme décrit précédemment, le module 100 d'éclairage peut éventuellement comprendre plus que deux sources lumineuses 110a, 110b ;
- deux guides optiques 130a, 130b, chaque guide optique 130a, 130b étant associé à l'une des sources lumineuses 110a, 110b afin de mettre en forme les rayons lumineux générés par ladite source lumineuse 110a, 110b et de générer un faisceau lumineux selon l'une des fonctions lumineuses décrites précédemment. De plus, chaque guide optique 130a, 130b s'étend selon un axe optique orienté dans une direction différente de celui des autres guides optiques 130a, 130b ;
- un unique substrat 120 pour solidariser les sources lumineuses 110a, 110b, ledit substrat 120 étant plan afin de faciliter l'intégration du module 100 d'éclairage dans l'habitacle du véhicule automobile. Dans l'exemple illustré sur la FIGURE 1, le substrat 120 est de forme rectangulaire et s'étend de part et d'autre des sources lumineuses 110a, 110b. Bien entendu, le substrat 120 peut prendre n'importe quelle forme afin de satisfaire aux exigences d'encombrement dans l'habitacle, et plus particulièrement dans le plafonnier dans lequel le module 100 d'éclairage est destiné à être monté. Le substrat 120 est délimité par une première surface plane 121 située en regard des guides optiques 130a, 130b du module d'éclairage 100 et une deuxième surface plane 122 située à l'opposé des guides optiques dudit module d'éclairage 100 par rapport à la première surface plane 121. Conformément à l'invention, le substrat 120 du module d'éclairage 100 est destiné à collaborer avec un circuit électrique 400 de l'habitacle du véhicule automobile, et plus particulièrement le plafonnier. Cette collaboration est réalisée par une communication électrique d'une partie des pistes électrique du circuit électrique 400 de l'habitacle avec le substrat 120 et/ou par un couplage mécanique entre le substrat 120 et le circuit électrique 400 dudit habitacle.

Chaque source lumineuse 110a, 110b est couplée optiquement à une extrémité du guide optique 130a, 130b avec laquelle elle collabore. Afin de faciliter le couplage optique de la source lumineuse 110a, 110b avec le guide optique 130a, 130b, la source lumineuse 110a, 110b est avantageusement fixée contre une face en regard du guide optique 130a, 130b située au niveau de l'extrémité du guide optique 130a, 130b situé du côté du substrat 120. Alternativement, le couplage optique d'au moins une partie des sources lumineuses 110a, 110b peut être amélioré par l'utilisation d'un dispositif optique permettant d'orienter les rayons lumineux générés par la source lumineuse 110a, 110b dans le guide optique 130a, 130b, tel qu'un collimateur par exemple.

Les sources lumineuses 110a, 110b peuvent être de n'importe quel type ; préférentiellement, les sources lumineuses 110a, 110b sont du type d'au moins une diode électroluminescente émettant des rayons lumineux dont au moins une partie a une longueur d'onde comprise entre 300 nm et 800 nm.

Chaque source lumineuse 110a, 110b est couplée électriquement avec le substrat 120 afin de pouvoir être polarisée afin de générer les rayons lumineux correspondants. Le couplage électrique des sources lumineuses 110a, 110b avec le substrat 120 peut être réalisé par exemple par brasure.

Le substrat comprend préférentiellement une carte électronique et/ou un circuit imprimé permettant de contrôler chaque source lumineuse 110a, 110b de manière sélective ou collectivement. Le pilotage des sources lumineuses 110a, 110b et/ou du module 100 d'éclairage est assuré par un module de commande non représenté.

Chaque guide optique 130a, 130b est agencé pour mettre en forme les rayons lumineux générés par la source lumineuse 110a, 110b à laquelle il est couplé, de manière à former un faisceau lumineux conformé afin de produire une fonction lumineuse prédéterminée. Le faisceau lumineux - et donc la fonction lumineuse correspondante - sont déterminés notamment par le type de source lumineuse 110a, 110b utilisée, et/ou une puissance lumineuse générée par ladite source lumineuse 110a, 110b, et/ou une longueur d'onde des rayons lumineux générés, et/ou une forme de faisceau lumineux et/ou une orientation du faisceau lumineux et/ou un angle d'ouverture dudit faisceau lumineux.

Les guides optiques 130a, 130b sont réalisés dans un matériau transparent pour les longueurs d'ondes des rayons lumineux émis par les sources lumineuses 110a, 110b, tel que par exemple du verre ou un matériau plastique. De manière avantageuse, chaque guide optique 130a, 130b est réalisé par moulage. Éventuellement, tous les guides optiques 130a, 130b du module 100 d'éclairage sont venus de matière, par exemple à l'issu d'un unique procédé de moulage. Alternativement, chaque guide optique 130a, 130b peut former une pièce indépendante des autres guides optiques 130a, 130b.

Dans l'exemple illustré sur la FIGURE 1, chaque guide optique 130a, 130b comprend un axe de symétrie formant un axe optique du guide optique 130a, 130b et du faisceau lumineux mis en forme. L'axe optique de chaque guide optique 130a, 130b est avantageusement perpendiculaire au substrat 120. Les guides optiques 130a, 130b sont ainsi au moins en partie situés à l'aplomb du substrat 120. Chaque guide optique 130a, 130b est de forme parabolique ou hyperbolique. Chaque guide optique 130a, 130b est délimité latéralement par des parois de forme parabolique ou hyperbolique afin de mettre en forme les rayons lumineux qui peuvent se propager à l'intérieur du guide optique 130a, 130b, par exemple par réflexions internes. Éventuellement, une ou plusieurs faces intérieures des guides optiques 130a, 130b sont métallisées afin de faciliter les réflexions des rayons lumineux sur les parois desdites guides optiques 130a, 130b.

Dans l'exemple illustré sur la FIGURE 1, les guides optiques 130a, 130b n'ont pas la même forme afin de générer des faisceaux lumineux de forme différentes - permettant ainsi de réaliser des fonctions lumineuses différentes. En particulier, un angle d'ouverture du premier guide optique 130a associé à la première source lumineuse 110a est inférieur à un angle d'ouverture du deuxième guide optique 130b associé à la deuxième source lumineuse 110b. Consécutivement, le faisceau lumineux généré par la première source lumineuse 110a collaborant avec le premier guide optique 130a a une ouverture angulaire inférieure à celle du faisceau lumineux généré par la deuxième source lumineuse 110b collaborant avec le deuxième guide optique 130b.

L'ouverture angulaire du guide optique 130a, 130b ou du faisceau lumineux formé par lui traduit une distance angulaire entre les rayons lumineux les plus divergents dudit faisceau lumineux émergeant dudit guide optique 130a, 130b. De manière plus particulière, l'ouverture angulaire est définie par l'angle sous-tendu par l'axe optique dudit guide optique 130a, 130b (ou du faisceau lumineux correspondant) et :
- pour le guide optique 130a, 130b, la paroi latérale délimitant ledit guide optique 130a, 130b ; ou
- pour le faisceau lumineux, le rayon lumineux le plus divergent.

Dans l'exemple illustré sur la FIGURE 2, les guides optiques 130a, 130b n'ont pas la même forme afin de générer des faisceaux lumineux de forme différentes - permettant ainsi de réaliser des fonctions lumineuses différentes.

Chaque guide optique 130a, 130b comprend un tronçon de projection 133a, 133b afin de mettre en forme les rayons lumineux traversant le guide optique 130a, 130b et un tronçon de guidage 131a, 131b afin de guider les rayons lumineux émis par la source lumineuse 110a, 110b correspondante vers ledit tronçon de projection 133.

Le tronçon de guidage 131a, 131b, est, au niveau de son extrémité située en regard de la source lumineuse 110a, 110b correspondante, couplé optiquement à ladite source lumineuse 110a, 110b afin qu'au moins une partie des rayons lumineux générés par ladite source lumineuse 110a, 110b soit injectée dans le guide optique 130a, 130b. Le couplage optique peut être direct ou indirect, par l'intermédiaire d'un dispositif optique tel qu'un collimateur par exemple.

Pour le premier guide optique 130a associé à la première source lumineuse 110a, le tronçon de guidage 131a-132a comprend une première partie rectiligne 131a et une deuxième partie coudée 132a. Sa section est globalement constante. Sa section est avantageusement circulaire mais peut prendre n'importe quelle autre forme, notamment polygonale.

La première partie 131a du tronçon de guidage 131a-132a du premier guide optique 130a s'étend dans une direction sensiblement perpendiculaire au plan du substrat 120 et/ou de la première source lumineuse 110a telle que représentée sur la FIGURE 2. La première partie 131a du tronçon de guidage 131a-132a s'étend ainsi à l'aplomb de la première source lumineuse 110a et/ou du substrat 120.

La deuxième partie 132a coudée du tronçon de guidage 131a-132a a une section préférentiellement identique à celle de la première partie 131a rectiligne dudit tronçon de guidage 131a-132a. La superficie de la section de la deuxième partie 132a coudée du tronçon de guidage 131a-132a est préférentiellement égale à celle de la première partie 131a rectiligne. La forme de la section de la deuxième partie 132a coudée du tronçon de guidage 131a-132a est préférentiellement du même type que celle de la première partie 131a rectiligne.

La deuxième partie coudée 132a du tronçon de guidage 131a est prolongé par le tronçon de projection 133a avec une continuité des formes des parois et/ou de la section. Le tronçon de projection 133a a une section divergente dans une direction s'éloignant du tronçon de guidage 131a : une superficie du tronçon de projection 133a est supérieure à une superficie du tronçon de guidage 131a au niveau d'une extrémité distale du tronçon de projection 133a par rapport au tronçon de guidage 131a. De plus, la forme de la section du premier guide optique 130a évolue continument entre le tronçon de guidage 131a et le tronçon de projection 133a : du côté de l'extrémité du tronçon de guidage 131a située vers la première source lumineuse 110a, la section dudit tronçon de guidage 131a est circulaire, tandis que, du côté d'une extrémité distale du tronçon de projection 133a par rapport au tronçon de guidage 131a, la section dudit tronçon de projection 133a est polygonale, et plus particulièrement rectangulaire avec les angles arrondis. Entre ces deux extrémités, la section du premier guide optique 130a évolue par transformation morphologique continue.

Pour le deuxième guide optique 130b associé à la deuxième source lumineuse 110b, le tronçon de guidage 131b est rectiligne. Sa section est globalement constante. Sa section est avantageusement circulaire mais peut prendre n'importe quelle autre forme, notamment polygonale. Le tronçon de guidage 131b s'étend dans une direction sensiblement perpendiculaire au plan du substrat 120 et/ou de la deuxième source lumineuse 110b telle que représentée sur la FIGURE 2. Le tronçon de guidage 131b s'étend ainsi à l'aplomb de la deuxième source lumineuse 110b et/ou du substrat 120.

Le tronçon de guidage 131b est prolongé par le tronçon de projection 133b avec une continuité des formes des parois et/ou de la section. Le tronçon de projection 133b a une section divergente dans une direction s'éloignant du tronçon de guidage 131b : une superficie du tronçon de projection 133b est supérieure à une superficie du tronçon de guidage 131b au niveau d'une extrémité distale du tronçon de projection 133b par rapport au tronçon de guidage 131b. Complémentairement, la forme de la section du deuxième guide optique 130b évolue continument entre le tronçon de guidage 131b et le tronçon de projection 133b : du côté de l'extrémité du tronçon de guidage 131b située vers la deuxième source lumineuse 110b, la section dudit tronçon de guidage 131b est circulaire, tandis que, du côté d'une extrémité distale du tronçon de projection 133b par rapport au tronçon de guidage 131b, la section dudit tronçon de projection 133b est polygonale, et plus particulièrement rectangulaire avec les angles arrondis. Entre ces deux extrémités, la section du deuxième guide optique 130b évolue par transformation morphologique continue.

Le tronçon de projection 133b du deuxième guide optique 130b s'étend dans la même direction que le tronçon de guidage 131b. En d'autres termes, le tronçon de projection s'étend de manière sensiblement perpendiculaire au substrat 120 et/ou au plan de la deuxième source lumineuse 110b représentée sur la FIGURE 2. De manière avantageuse, le tronçon de projection 133b s'étend à l'aplomb du substrat 120 et/ou de la deuxième source lumineuse 110b.

Au niveau de l'extrémité distale du tronçon de projection 133b par rapport au tronçon de guidage 131b, le deuxième guide optique 133b comprend une bordure 134b formant un trottoir entourant le tronçon de projection 133b.

Dans chaque exemple de réalisation illustré sur les FIGURES 1 et 2, à l'extrémité distale des guides optiques 130a, 130b par rapport au substrat 120, le module d'éclairage 100 comprend avantageusement une fenêtre optique 140 permettant d'obturer lesdits guides optiques 130a, 130b tout en autorisant la transmission du ou des faisceaux lumineux générés par ledit module d'éclairage 100. Selon un mode de réalisation particulier, la fenêtre optique 140 est venue de matière avec au moins un des guides optiques 130a, 130b, et préférentiellement avec tous les guides optiques 130a, 130b, de sorte que l'ensemble formé par les guides optiques 130a, 130b et de la fenêtre optique 140 forme une unique pièce monobloc.

La fenêtre optique 140 est formée au moins en partie par un matériau transparent aux longueurs d'ondes des rayons lumineux générés par les sources lumineuses 110a, 110b, tel que par exemple du verre ou un matériau plastique.

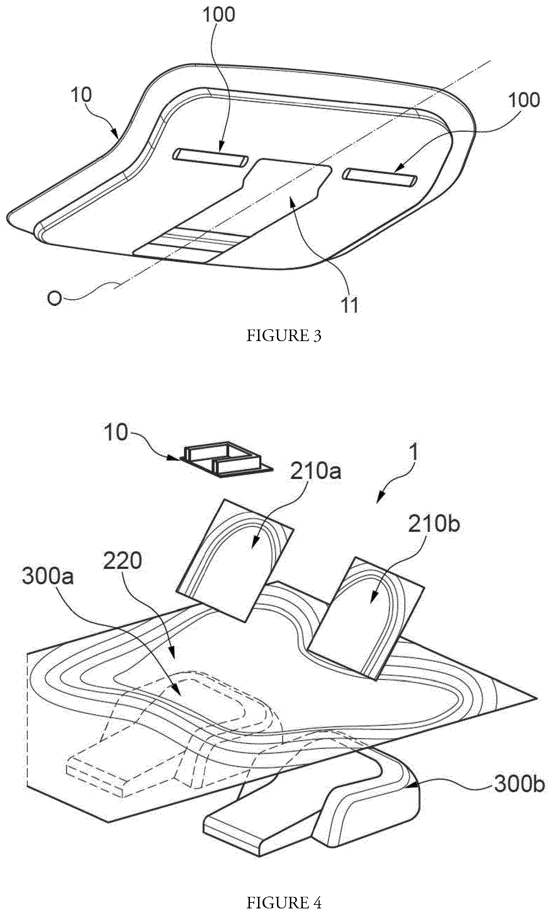

La FIGURE 3 illustre une vue partielle d'un plafonnier 10 d'habitacle 1 intégrant deux modules d'éclairage 100 conformes au premier aspect de l'invention, et la FIGURE 4 illustre une vue partielle d'un habitacle 1 de véhicule automobile conforme au deuxième aspect de l'invention, dans lequel sont représentés les différents faisceaux lumineux générés par les modules d'éclairage 100.

De manière avantageuse, chaque module d'éclairage 100 conforme au premier aspect de l'invention est logé dans un plafonnier 10 afin de permettre d'éclairer efficacement une partie de l'habitacle 1 pour au moins un des usagers du véhicule automobile.

Préférentiellement, chaque module lumineux 100 est logé d'un côté latéral du plafonnier 10, c'est-à-dire de part et d'autre d'un axe longitudinal O du plafonnier 10, coïncidant avec un axe longitudinal du véhicule automobile intégrant un tel plafonnier 10. Plus particulièrement, chaque module d'éclairage 100 est situé symétriquement par rapport à l'axe longitudinal O. Chaque module d'éclairage 100 peut être situé à proximité d'une ouverture vitrée 11 du plafonnier 10.

Le ou les modules d'éclairage 100 conforme au premier aspect de l'invention sont avantageusement situés sur une partie frontale du plafonnier 10 de l'habitacle 1 du véhicule automobile. Plus particulièrement, le ou les modules d'éclairage sont situés au niveau des sièges avant 300a, 300b de l'habitacle 1, par exemple à l'aplomb d'une assise ou d'un dossier des sièges avant 300a, 300b de l'habitacle 1.

La FIGURE 4 illustre les intensités lumineuses des faisceaux lumineux projetés par les modules d'éclairage 100 logés dans le plafonnier 10. En particulier :
- un premier module d'éclairage 100 peut générer un premier faisceau lumineux 210a et/ou un faisceau lumineux complémentaire collaborant avec ledit premier faisceau pour former - au moins en partie, un deuxième faisceau lumineux 220 ;
- un deuxième module d'éclairage 100 peut générer un premier faisceau lumineux 210b et/ou un faisceau lumineux complémentaire collaborant avec ledit premier faisceau pour former - au moins en partie, le deuxième faisceau lumineux 220.

On comprend ainsi que chaque module d'éclairage 100 peut générer alternativement ou complémentairement un premier type faisceau lumineux lorsque seule la première source lumineuse 110a est activée - produisant le premier faisceau lumineux 210, un deuxième type de faisceau lumineux lorsque seule la deuxième source lumineuse 110b est activée - produisant le faisceau lumineux complémentaire, ou un troisième type de faisceau lumineux lorsque les première 110a et deuxième 11b sources lumineuses sont simultanément activées - produisant au moins en partie le deuxième faisceau lumineux 220.

Chaque premier faisceau lumineux 210a, 210b généré par les modules d'éclairage 100 produit une première fonction lumineuse du type liseuse : l'étendue spatiale des rayons lumineux mis en forme par le premier guide optique 130a de chaque module d'éclairage 100 est localisée à une zone de faible étendue spatiale, au regard d'une superficie de l'habitacle 1. Cette caractéristique technique de chaque premier faisceau lumineux 210a, 210b est obtenue par un faible angle d'ouverture du premier guide optique 130a, 130b correspondant.

De plus, le plan de projection de chaque premier faisceau lumineux 210a, 210b est incliné par rapport à un plan horizontal de l'habitacle 1, non représenté sur la FIGURE 4. Le plan horizontal de l'habitacle 1 correspond au plan horizontal d'un usage normal du véhicule automobile comprenant ledit habitacle 1. L'inclinaison du plan de projection de chaque premier faisceau lumineux 210a est préférentiellement égale à 45° par rapport au plan horizontal. Éventuellement, l'inclinaison du plan de projection de chaque premier faisceau lumineux 210a est comprise entre 30° et 60° par rapport au plan horizontal. Cette caractéristique technique de chaque premier faisceau lumineux 210a, 210b est obtenue par une inclinaison semblable de l'axe optique du premier guide optique 130a correspondant du module d'éclairage 100. Plus particulièrement, le premier guide optique 130a est orienté suivant un axe optique dont un angle par rapport au plan horizontal est compris entre 30° et 60°, préférentiellement égal à 45°.

Consécutivement, chaque premier faisceau lumineux généré par le(s) module(s) d'éclairage 100 a des caractéristiques techniques qui le rendent adapté pour focaliser les rayons lumineux produits par les sources lumineuses 110a, 110b correspondantes au niveau d'une zone localisée de l'habitacle 1, susceptible de permettre une lecture par l'un des usagers dudit véhicule automobile.

La deuxième source lumineuse 110b de chaque module d'éclairage 100 peut être pilotée de manière à générer des rayons lumineux, complémentairement ou alternativement à l'émission de rayons lumineux par la première source lumineuse 110a de chaque module d'éclairage 100. Préférentiellement, la deuxième source lumineuse 110b d'au moins un des modules d'éclairage 100 de l'habitacle 1 est activée simultanément avec la première source lumineuse 110a du module d'éclairage 100 correspondant. L'activation simultanée de la première source lumineuse 110a et de la deuxième source lumineuse 110b d'au moins un module d'éclairage 100 permet de générer au moins en partie le deuxième faisceau lumineux 220.

Le faisceau lumineux complémentaire généré par la deuxième source lumineuse 110b de chaque module d'éclairage 100 s'étend sur une surface plus étendue que celle du premier faisceau lumineux 210. Cette caractéristique technique est obtenue par un angle d'ouverture du deuxième guide optique 130b supérieur à celui du premier guide optique 130a.

De plus, le plan de projection de chaque faisceau lumineux complémentaire est sensiblement compris dans le plan horizontal de l'habitacle 1. Cette caractéristique technique est obtenue par une inclinaison semblable de l'axe optique du deuxième guide optique 130b correspondant du module d'éclairage 100 correspondant. Plus particulièrement, le deuxième guide optique 130b est orienté suivant un axe optique sensiblement perpendiculaire par rapport au plan horizontal.

Selon un mode de réalisation particulier, pour chaque module d'éclairage 100, le premier faisceau lumineux 210 et le faisceau lumineux complémentaire se chevauchent au moins partiellement afin d'augmenter la surface d'éclairage dans l'habitacle 1 et de produire un éclairage d'ambiance dudit habitacle 1.

Selon un mode de réalisation préféré, le premier faisceau lumineux 210a et/ou le faisceau lumineux complémentaire du premier module d'éclairage 100 chevauchent au moins en partie le premier faisceau lumineux 210a et/ou le faisceau lumineux complémentaire du deuxième module d'éclairage 100, selon n'importe laquelle des combinaisons. Cette configuration avantageuse est illustrée plus particulièrement sur la FIGURE 4, au travers du deuxième faisceau lumineux 220 dont la distribution spatiale couvre quasiment toute la surface de l'habitacle 1 située devant les sièges avant 300a, 300b.

Bien évidemment, chaque source lumineuse 110a, 110b de chaque module d'éclairage 100, et/ou chaque module d'éclairage 100 de l'habitacle 1 peut être piloté sélectivement ou collectivement afin de générer au moins un des premiers faisceaux lumineux et/ou au moins un des faisceaux lumineux complémentaires, afin de réaliser au moins deux fonctions lumineuses différentes parmi celles décrites précédemment.

En synthèse, l'invention concerne un module d'éclairage 100 intérieur pour un habitacle 1 de véhicule automobile, ledit module d'éclairage 100 comprenant au moins deux sources lumineuses 110a, 110b, chaque source lumineuse 110a, 110b étant associée à un guide optique 130a, 130b afin de mettre au moins deux faisceaux lumineux distincts. Le module d'éclairage 100 permet ainsi de produire au moins deux fonctions lumineuses, préférentiellement distinctes l'une de l'autre. Selon l'invention, les sources lumineuses 110a, 110b du module d'éclairage 100 sont solidaires d'un même substrat 120 plan afin de faciliter son intégration dans l'habitacle 1 du véhicule automobile et de faciliter l'établissement des connexions électriques avec le circuit électrique dudit habitacle 1.

Bien sûr, l'invention n'est pas limitée aux exemples qui viennent d'être décrits et de nombreux aménagements peuvent être apportés à ces exemples sans sortir du cadre de l'invention qui est défini par les revendications annexées. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Module (100) d'éclairage intérieur pour véhicule automobile, ledit module (100) comprenant :
- au moins deux sources lumineuses (110a, 110b) agencées pour pouvoir émettre des rayons lumineux ;
- au moins deux guides optiques (130a, 130b), chaque guide optique (130a, 130b) ayant un axe optique qui s'étend dans une direction différente des axes optiques des autres guides optiques (130a, 130b), chaque guide optique (130a, 130b) étant associé à l'une des sources lumineuses (110a, 110b) afin de mettre en forme les rayons lumineux générés par ladite source lumineuse (110a, 110b) et de générer un faisceau lumineux ;
- un unique substrat (120) pour solidariser les au moins deux sources lumineuses (110a, 110b), le substrat (120) étant plan ;
**caractérisé en ce que** les guides optiques (130) sont réalisées dans un matériau transparent pour les longueurs d'ondes des rayons lumineux émis par les sources lumineuses (110a, 110b), et **en ce que** le substrat comprend au moins une surface plane formant un plan d'élongation dudit substrat, la surface plane du substrat étant formée par une première face située en regard des guides optiques du module d'éclairage.

2. Module (100) selon la revendication précédente, dans lequel chaque source lumineuse (110a, 110b) est couplée optiquement à une extrémité d'un des guides optiques (130a, 130b).

3. Module (100) selon l'une quelconque des revendications 1 ou 2, dans lequel chaque guide optique (130a, 130b) comprend un tronçon de guidage (131a, 131b) et un tronçon de projection (133a, 133b).

4. Module (100) selon la revendication précédente, dans lequel le tronçon de guidage (131a, 131b) est situé entre le tronçon de projection (133a, 133b) et la source lumineuse (110a, 110b) correspondante.

5. Module (100) selon l'une quelconque des revendications 3 ou 4, dans lequel le tronçon de guidage (131a, 131b) est rectiligne.

6. Module (100) selon l'une quelconque des revendications 3 ou 4, dans lequel le tronçon de guidage (131a, 131b) comprend au moins une partie coudée (132).

7. Module (100) selon l'une quelconque des revendications 3 à 6, dans lequel le tronçon de projection (133a, 133b) est parabolique ou hyperbolique.

8. Module (100) selon l'une quelconque des revendications précédentes, dans lequel les au moins deux guides optiques (130a, 130b) comprennent un premier guide optique (130a) pour générer un premier faisceau lumineux selon un premier angle d'ouverture et selon un premier axe optique, et un deuxième guide optique (130b) pour générer un deuxième faisceau lumineux selon un deuxième angle d'ouverture et selon un deuxième axe optique.

9. Module (100) selon la revendication précédente, dans lequel le premier angle d'ouverture est inférieur au deuxième angle d'ouverture.

10. Module (100) selon l'une quelconque des revendications 8 ou 9, dans lequel le premier faisceau lumineux recouvre au moins en partie le deuxième faisceau lumineux.

11. Module (100) selon l'une quelconque des revendications 1 à 10, le module (100) comprenant une fenêtre optique (140) située à une extrémité distale des au moins deux guides optiques (130a, 130b) par rapport au substrat (120), ladite fenêtre optique (140) couvrant au moins les deux guides optiques (130a, 130b).

12. Module (100) selon la revendication précédente, dans lequel la fenêtre optique (140) s'étend selon un plan sécant avec un plan d'élongation du substrat (120).

13. Habitacle (1) de véhicule automobile comprenant au moins un module (100) d'éclairage intérieur selon l'une quelconque des revendications précédentes, chaque module (100) d'éclairage étant intégré à un plafonnier (10) dudit habitacle (1).

14. Habitacle (1) selon la revendication précédente, pris en combinaison avec la revendication 8, dans lequel le premier axe optique du premier guide optique (130a, 130b) du module (100) est orienté au niveau d'un siège (300) dudit habitacle (1), et le deuxième axe optique du deuxième guide optique (130a, 130b) est orienté en direction d'une console centrale dudit habitacle (1).

15. Habitacle (1) selon l'une quelconque des revendications 13 ou 14, dans lequel le premier guide optique (130a, 130b) est agencé pour générer un premier faisceau lumineux avec un angle d'ouverture inférieur à un angle d'ouverture d'un deuxième faisceau lumineux généré par le deuxième guide optique (130a, 130b).

16. Habitacle (1) selon l'une quelconque des revendications 13 à 15, dans lequel le substrat (120) de chaque module (100) est couplé électriquement à un circuit électrique du plafonnier (10) et solidaire dudit circuit électrique (10).

## Patentansprüche

1. Modul (100) zur Innenbeleuchtung für ein Kraftfahrzeug, wobei das Modul (100) umfasst:
- mindestens zwei Lichtquellen (110a, 110b), die dazu eingerichtet sind, Lichtstrahlen emittieren zu können;
- mindestens zwei Lichtleiter (130a, 130b), wobei jeder Lichtleiter (130a, 130b) eine optische Achse hat, die sich in eine von den optischen Achsen der anderen Lichtleiter (130a, 130b) verschiedene Richtung erstreckt, wobei jeder Lichtleiter (130a, 130b) einer der Lichtquellen (110a, 110b) zugeordnet ist, um die von der Lichtquelle (110a, 110b) erzeugten Lichtstrahlen zu formen und ein Lichtbündel zu erzeugen;
- ein einziges Substrat (120), um die mindestens zwei Lichtquellen (110a, 110b) zu verbinden, wobei das Substrat (120) eben ist;
**dadurch gekennzeichnet, dass** die Lichtleiter (130) aus einem Material hergestellt sind, das für die von den Lichtquellen (110a, 110b) emittierten Lichtstrahlen transparent ist, und dadurch, dass das Substrat mindestens eine ebene Fläche umfasst, die eine Erstreckungsebene des Substrats bildet, wobei die ebene Fläche des Substrats durch eine erste Seite gebildet wird, die gegenüber den Lichtleitern des Beleuchtungsmoduls gelegen ist.

2. Modul (100) nach dem vorhergehenden Anspruch, wobei jede Lichtquelle (110a, 110b) optisch an ein Ende eines der Lichtleiter (130a, 130b) gekoppelt ist.

3. Modul (100) nach einem der Ansprüche 1 oder 2, wobei jeder Lichtleiter (130a, 130b) einen Leitabschnitt (131a, 131b) und einen Projektionsabschnitt (133a, 133b) umfasst.

4. Modul (100) nach dem vorhergehenden Anspruch, wobei der Leitabschnitt (131a, 131b) zwischen dem Projektionsabschnitt (133a, 133b) und der entsprechenden Lichtquelle (110a, 110b) gelegen ist.

5. Modul (100) nach einem der Ansprüche 3 oder 4, wobei der Leitabschnitt (131a, 131b) geradlinig ist.

6. Modul (100) nach einem der Abschnitte 3 oder 4, wobei der Leitabschnitt (131a, 131b) mindestens einen gebogenen Teil (132) umfasst.

7. Modul (100) nach einem der Ansprüche 3 bis 6, wobei der Projektionsabschnitt (133a, 133b) parabolisch oder hyperbolisch ist.

8. Modul (100) nach einem der vorhergehenden Ansprüche, wobei die mindestens zwei Lichtleiter (130a, 130b) einen ersten Lichtleiter (130a) umfassen, um ein erstes Lichtbündel gemäß einem ersten Öffnungswinkel und gemäß einer ersten optischen Achse zu erzeugen, und einen zweiten Lichtleiter (130b), um ein zweites Lichtbündel gemäß einem zweiten Öffnungswinkel und gemäß einer zweiten optischen Achse zu erzeugen.

9. Modul (100) nach dem vorhergehenden Anspruch, wobei der erste Öffnungswinkel kleiner als der zweite Öffnungswinkel ist.

10. Modul (100) nach einem der Ansprüche 8 oder 9, wobei das erste Lichtbündel das zweite Lichtbündel mindestens teilweise überlappt.

11. Modul (100) nach einem der Ansprüche 1 bis 10, wobei das Modul (100) ein optisches Fenster (140) umfasst, das an einem distalen Ende der mindestens zwei Lichtleiter (130a, 130b) bezogen auf das Substrat (120) gelegen ist, wobei das optische Fenster (140) mindestens die beiden Lichtleiter (130a, 130b) bedeckt.

12. Modul (100) nach dem vorhergehenden Anspruch, wobei sich das optische Fenster (140) entlang einer Ebene erstreckt, die eine Erstreckungsebene des Substrats (120) schneidet.

13. Innenraum (1) eines Kraftfahrzeugs, umfassend mindestens ein Modul (100) zur Innenbeleuchtung nach einem der vorhergehenden Ansprüche, wobei jedes Modul (100) zur Beleuchtung in eine Deckenleuchte (10) des Innenraums (1) integriert ist.

14. Innenraum (1) nach dem vorhergehenden Anspruch in Kombination mit Anspruch 8, wobei die erste optische Achse des ersten Lichtleiters (130a, 130b) des Moduls (100) an einem Sitz (300) des Innenraums (1) ausgerichtet ist und die zweite optische Achse des zweiten Lichtleiters (130a, 130b) in Richtung einer Mittelkonsole des Innenraums (1) ausgerichtet ist.

15. Innenraum (1) nach einem der Ansprüche 13 oder 14, wobei der erste Lichtleiter (130a, 130b) dazu eingerichtet ist, ein erstes Lichtbündel mit einem Öffnungswinkel zu erzeugen, der kleiner als ein Öffnungswinkel eines zweiten Lichtbündels ist, das von dem zweiten Lichtleiter (130a, 130b) erzeugt wird.

16. Innenraum (1) nach einem der Ansprüche 13 bis 15, wobei das Substrat (120) jedes Moduls (100) mit einer elektrischen Schaltung der Deckenleuchte (10) elektrisch gekoppelt ist und mit der elektrischen Schaltung (10) fest verbunden ist.

## Claims

1. Interior luminous module (100) for an automotive vehicle, said module (100) comprising:
- at least two light sources (110a, 110b) designed to be able to emit light rays;
- at least two light guides (130a, 130b), each light guide (130a, 130b) having an optical axis which extends in a different direction from the optical axes of the other light guides (130a, 130b), each light guide (130a, 130b) being associated with one of the light sources (110a, 110b) in order to shape the light rays generated by said light source (110a, 110b) and generate a light beam;
- a single substrate (120) for securing the at least two light sources (110a, 110b), the substrate (120) being planar;
**characterized in that** the light guides (130) are made from a material transparent to the wavelengths of the light rays emitted by the light sources (110a, 110b), and **in that** the substrate comprises at least one flat surface forming a plane of elongation of said substrate, the flat surface of the substrate being formed by a first face which faces the light guides of the luminous module.

2. Module (100) according to the preceding claim, wherein each light source (110a, 110b) is optically coupled to an end of one of the light guides (130a, 130b).

3. Module (100) according to either one of Claims 1 and 2, wherein each light guide (130a, 130b) comprises a guide portion (131a, 131b) and a projection portion (133a, 133b).

4. Module (100) according to the preceding claim, wherein the guide portion (131a, 131b) is situated between the projection portion (133a, 133b) and the corresponding light source (110a, 110b).

5. Module (100) according to either one of Claims 3 and 4, wherein the guide portion (131a, 131b) is rectilinear.

6. Module (100) according to either one of Claims 3 and 4, wherein the guide portion (131a, 131b) comprises at least one curved part (132).

7. Module (100) according to any one of Claims 3 to 6, wherein the projection portion (133a, 133b) is parabolic or hyperbolic.

8. Module (100) according to any one of the preceding claims, wherein the at least two light guides (130a, 130b) comprise a first light guide (130a) for generating a first light beam at a first aperture angle and along a first optical axis, and a second light guide (130b) for generating a second light beam at a second aperture angle and along a second optical axis.

9. Module (100) according to the preceding claim, wherein the first aperture angle is smaller than the second aperture angle.

10. Module (100) according to either one of Claims 8 and 9, wherein the first light beam at least partially overlaps the second light beam.

11. Module (100) according to any one of Claims 1 to 10, the module (100) comprising an optical window (140) situated at a distal end of the at least two light guides (130a, 130b) relative to the substrate (120), said optical window (140) covering at least the two light guides (130a, 130b).

12. Module (100) according to the preceding claim, wherein the optical window (140) extends in a plane secant with a plane of elongation of the substrate (120).

13. Automotive vehicle interior (1) comprising at least one interior luminous module (100) according to any one of the preceding claims, each luminous module (100) being incorporated in a dome light (10) of said vehicle interior (1).

14. Vehicle interior (1) according to the preceding claim, taken in combination with Claim 8, wherein the first optical axis of the first light guide (130a, 130b) of the module (100) is oriented at a seat (300) of said vehicle interior (1), and the second optical axis of the second light guide (130a, 130b) is oriented towards a central console of said vehicle interior (1).

15. Vehicle interior (1) according to either one of Claims 13 and 14, wherein the first light guide (130a, 130b) is designed to generate a first light beam with an aperture angle smaller than an aperture angle of a second light beam generated by the second light guide (130a, 130b) .

16. Vehicle interior (1) according to any one of Claims 13 to 15, wherein the substrate (120) of each module (100) is electrically coupled to an electrical circuit of the dome light (10) and integral with said electrical circuit (10).
